# EUROPEAN PATENT SPECIFICATION

(11) **EP 1 395 007 B1**
(45) Date of publication and mention of the grant of the patent: **10.10.2007**
(21) Application number: 03103236.0
(22) Date of filing: 28.08.2003
(51) Int. Cl.: H04L 12/64

(54) **Command synchronization establishment system and method, as well as controller and target apparatus for such system**
System zur Synchronisierung von Befehlen, sowie ein Verfahren, ein Steuerungsgerät und ein Zielgerät für dasselbe System
Système pour la synchronisation des commandes, et aussi procédé, contrôleur et appareil cible pour un tel système

(30) Priority: 29.08.2002 JP 2002250472
(43) Date of publication of application: 03.03.2004
(73) Proprietor: YAMAHA CORPORATION, Naka-ku Hamamatsu-shi Shizuoka-ken (JP)
(72) Inventor: Tatsutoshi, Abe, Hamamatsu-shi 430-8650 (JP); Junichi, Fujimori, Hamamatsu-shi 430-8650 (JP)
(74) Representative: Kehl, Günther

(56) References cited:
- EP-A- 0 586 768
- EP-A- 0 841 776
- US-A1- 2002 046 311
- US-A1- 2002 064 185
- US-B1- 6 430 359

## Description

### CROSS REFERENCE TO RELATED APPLICATION

This application is based on Japanese Patent Application 2002-250472, filed on August 29, 2002.

### BACKGROUND OF THE INVENTION

### A) FIELD OF THE INVENTION

This invention relates to a technique for establishing command synchronization wherein a command can be executed at a time designated by a time-stamp added to the command when the command is transmitted to a target from a controller via a communication network.

### B) DESCRIPTION OF THE RELATED ART

The IEEE 1394 Standard is well known as a recent serial interface standard. In this Standard, data is transmitted in real time by an isochronous transfer in which a right for certainly transmitting data at a fixed cycle is given to each node. This is suitable for transferring data that is important to be transferred particular in real time such as images and sound. Generally, in the network using this Standard, by using a command format determined by IEC61883-1, a device dealing with audio and video transmits and receives information by an asynchronous transaction (command) transferred after isochronous area. For example, it conventionally has been performed that a command is transmitted in asynchronous from a PC to an audio device wherein the transmission is controlled by the PC with making the PC a controller and audio device a target.

In the network based on the IEEE 1394 Standard, it is considered that an isochronous packet is certainly transferred during a transmission cycle started by a cycle signal generated in accordance with a timing signal of 125µ-second cycle. Then, in a transmitter station, the isochronous packet added with a time-stamp corresponding to time difference of the above-described timing signal and the sampling timing on the data sampled from an analogue signal at a predetermined sampling timing is generated to be transmitted. In a receiver station, a system that reconstructs the data on the time axis based on the before-described time-stamp is considered (referrer to Japanese Patent Application Laid-open No. Hei-10-32606).

In the network based on the above-described IEEE 1394 Standard, when receiving timings for a plurality of receiving devices are needed to be agreed with each another, they are controlled by the above-described command although it is not easy to agree those timings. For example, in a case that each command is transmitted from the controller to the first and second targets to control those target devices, it was difficult to establish synchronization, that is, agreeing operating timings of the targets. Also, a case is considered that a command is received from other controller to be executed in one target device, and it was not possible to execute the desired command always at the same time. Moreover, in a different type of the target device, since executing speed is different by type of the devices, the timing may be shifted.

Also, in the network based on the IEEE 1394 Standard, when an isochronous transfer area is large, an asynchronous transfer area will be decreased, and there is a case that the command to be transferred in the asynchronous transfer area will be transferred in the next cycle may occur frequently. By that, command transfer will be delayed, and the controlling timing between the plurality of targets may be shifted.

The technique disclosed in JP-A Hei10-32606 is using the time-stamp in order to reconstruct waveform data, etc. to be transferred by isochronous packets on a time axis, and is not a technique at a time when to transfer the command by an asynchronous packet.

Patent application publication US 2002/064185 A1 discloses a technique for compensating a timer delay in an IEEE 1394 bus system involving the use of a time-stamp in which a controller measures timer delay only once, stores the measured value, generates a time-stamp and transmits the time-stamp to an executing device in order to compensate timer delay.

Patent application publication US 2002/046311 A1 discloses a technique for cancelling a command if a predetermined time has elapsed without response after transmission of the command in which a target apparatus notifies a controller that a NOTIFY command has become void due to a timeout.

### SUMMARY OF THE INVENTION

It is an object of the present invention to provide a command synchronization establishment system that can establish synchronization of timings of controls between targets by a command transmitted from a controller to the targets in a network having a structure for transferring wave data etc. by the isochronous transfer in real time and a structure for transferring a command by the asynchronous transfer. Also, it is an object of the present invention to provide a command synchronization establishment method, a controller for a command synchronization establishment system and a target apparatus for a command synchronization establishment system.

According to one aspect of the present invention, there is provided a command synchronization establishment system using a network wherein data is transferred by an isochronous transfer, a command is transferred by an asynchronous transfer, and a synchronized clock is shared (used together) by apparatuses connected to the network, the system comprising: a controller connected to the network and a target apparatus connected to the network, said controller comprising means for transmitting a command including a time-stamp to a target apparatus by using the asynchronous transfer; and the target apparatus comprising means for receiving the command, temporally means for storing the received command in order not to execute the received command instantly, and means for executing the received command in accordance with the time-stamp included in the command to be executed characterized in that the target apparatus comprises means for transmitting a first response to the controller, when the command is received by the target apparatus, and for transmitting a second response to the controller, indicating that said command received by said target apparatus is executed in accordance with the time stamp.

According to the present invention, synchronization of the processes corresponding to the command transmitted by the asynchronous transfer can be established in the targets. For example, audio wave data can be received at the same time by making the command a reception start command of the audio wave data (a logical connection to the transmission) and by designating a reception timing in the command.

Also, by assigning scene setting changes of mixers and parameter changes of effectors to the commands, a synchronized remote control of each device becomes possible. Also, either one of a method for executing the command immediately or a method for executing the command at a time of the time-stamp can be designated.

By using a part of the area for the time-stamp data representing a time as a flag for the designation, the command data can be transmitted without increasing an overall amount of the command data.

Moreover, the synchronization can be perfectly established among the devices of different versions by designating a command execution terminating time.

### BRIEF DESCRIPTION OF THE DRAWINGS

FIGs. 1A and 1B are diagrams showing examples of a network structure according to an embodiment of the present invention.
FIG. 2 is a diagram showing an example of a packet arrangement on the bus in an isochronous transfer mode.
FIGs. 3A and 3B are command flow diagrams between the controller and the target.
FIGs. 4A and 4B are diagrams showing a register space of the target.
FIGs. 5A to 5C are diagrams showing an example of a command packet.
FIG. 6 is a timing diagram showing a progress of the operation in each device of the system.
FIGs. 7A and 7B are flows of a process in a target device.

### DETAILED DESCRIPTION OF THE PREFERRED EMBODIMENTS

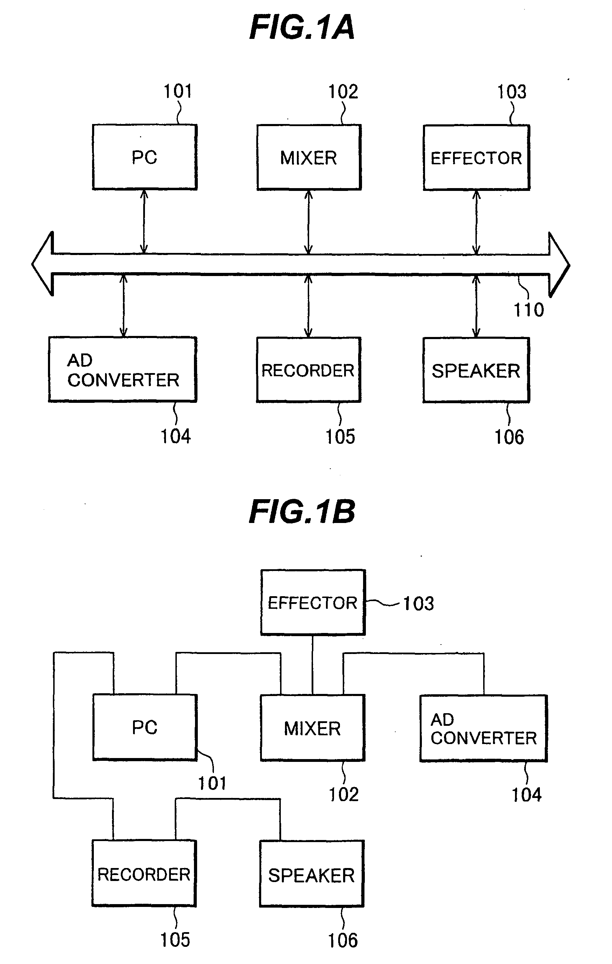

FIGs. 1A and 1B show examples of a network structure according to an embodiment of the present invention. FIG. 1A is a block diagram showing a hardware structure of the network, and FIG. 1B shows an example of a hardware structure corresponding to the structure shown in FIG. 1A. As shown in FIG. 1B, a PC 101, a mixer 102, an effecter 103, an AD converter 104, a recorder 105 and a loudspeaker 106 are physically connected to the network based on the IEEE 1394 Standard. This hardware structure shown in FIG. 1B can be considered logically as the structure shown in FIG. 1A. A bus 110 is a virtual bus (serial bus) for performing data transfer between devices 101 to 106. Each device connected to this bus 110 is called a node.

In the embodiment of the present invention, the network structure operates a data transmission as a system based on the IEEE1394 Standard. Particularly, the PC 101 transmits commands to the devices 102 to 106 as a controller to control the devices. Each of the other devices receives the controlling commands transmitted from the controller (PC 101) as a target and operates a process corresponding to the instruction of each command. In this specification, the controller is a device to transmit a command, and the target is a device to receive the command.

The mixer 102 arbitrary performs mixing of digital sound signals of plurality of input channels and outputs a mixed signal (or mixed signals) to arbitral output channels. The mixer 102 equips with plurality of faders and can set each channel level with the fader. Also, the mixer 102 has a function of scene setting. The scene indicates a mixing status and a connecting status at a certain moment. The setting statuses are stored as one scene, and setting statuses can be easily reconstructed by recalling the stored scene. The effecter 103 is a device that adds various kinds of effects to the digital sound signal. The AD converter is a device that converts the input analogue sound signal into digital sound signal. The recorder 106 is a sound system that sounds the analogue sound data converted from the digital musical data. A wiring condition of each device can be set arbitrary from, for example, the PC 101.

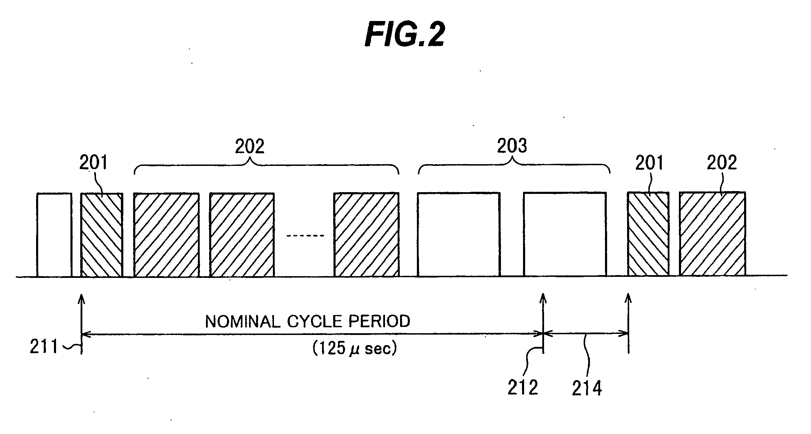

FIG. 2 is a diagram showing an example of a packet arrangement on the bus in an isochronous transfer mode. Three types of packets, a cycle start packet 201, an isochronous packet 202 and an asynchronous packet 203, are arranged on the time axis. Arrows 211 and 212 indicate a timing signal (cycle sync) that is considered as a standard timing in this system. This timing signal is a signal at a µ-second cycle (8 kHz).

The cycle start packet 201 is a packet transmitted from a node called a cycle master that is one of plurality of nodes connected to this bus. A new transmission cycle is started by the cycle start packet. The cycle master has a precise clock generator, and it tries to transmit the cycle start packet at a time interval of the above-described timing signal. However, when the transmission of other packet is in progress, transmission of the above-described cycle start packet is held to be waiting until the transmission is completed. A reference number 214 indicates delay time (start delay), and this delay time is encoded in the above-described cycle start packet and transmitted to each node. Moreover, the packet transmitted from the above-described node is guaranteed to be received by other node in the same clock period.

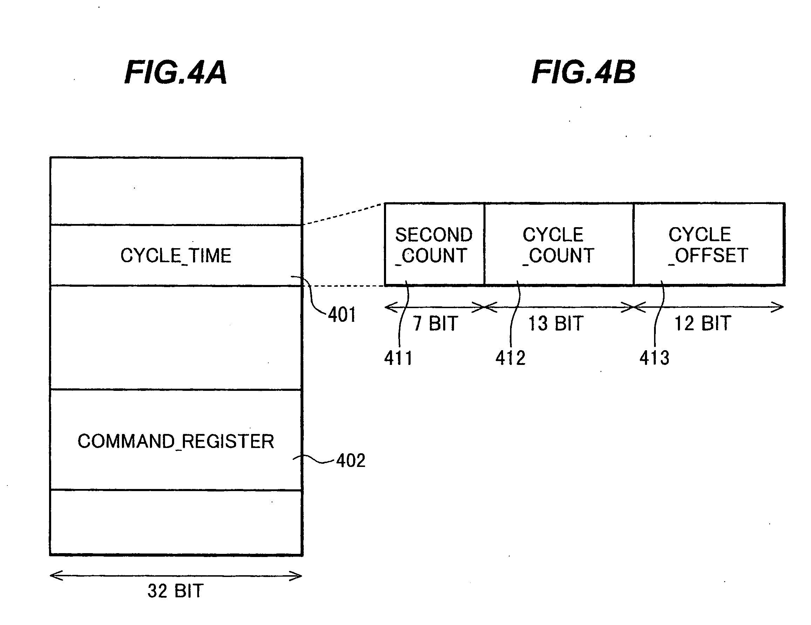

Each node equips with a cycle time register of 32 bits. By using the lower 12 bits, each cycle time register counts a clock signal of 24.576 MHz (cycle of 40.7n seconds) by dividing by 3072 as a divisor and counts a standard cycle of the above-described 8 kHz by the upper 13 bits.
Then, it is consisted to count seconds from the upper 7 bits (FIGs. 4A and 4B). Then, the above-described cycle master makes the cycle time registers of all other nodes copy contents of its own cycle time register, all the nodes are synchronized within a specific phase difference. By doing that, the common time standard is guaranteed in this network.

The isochronous packet 202 is a channel used for transmitting the data requiring a precise timing reference such as digital sound, video and musical performance data. These isochronous packets 202 are guaranteed to be certainly transmitted in each transmission cycle. Also, the above-described asynchronous packet 203 is a packet transmitted asynchronously when there is a blank time in the transmission cycle after finishing the transmission of the above-described isochronous packet 202. In the embodiment of the present invention, a command is transmitted from the PC 101 to each target devices 102 to 106 by using this asynchronous packet 203 to control each device.

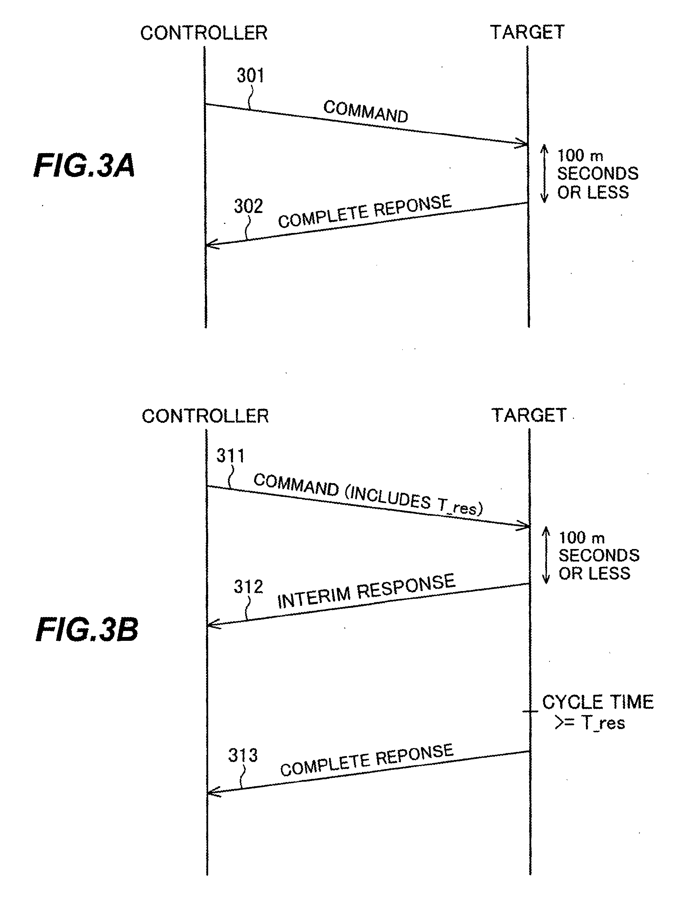

FIGs. 3A and 3B are command flow diagrams between the controller and the target. When the command is transmitted from the controller to the target by using the asynchronous packet as shown in the arrow 301, the target executes the command and responses Complete response 302 indicating that the command has executed within 100 mm seconds to the controller. It is difficult to establish synchronization of the operations among the plurality targets by only the method.

FIG. 3B shows a command flow between the controller and the target in the system of the embodiment of the present invention shown in FIGs. 1A and 1B. A command 311 is transmitted from the controller to the target. This command 311 includes a time-stamp T_res. The time-stamp T_res is a data to designate a time to execute the command. The target that received the command 311 transmits Interim response 312 to the controller within 100 mm seconds. The Interim response 312 is a responce representing that the received command is in a received condition. When a cycle time representing the present time reaches the time represented by the time-stamp T_res, the command is executed, and a Complete response 313 is transmitted to the controller. In FIG. 3B, since the time to execute the command can be designated by each target, synchronization of the operations among the plurality of targets can be established.

FIG. 4A shows a register space of the target in the embodiment of the present invention. As shown in FIG. 4B, a cycle time register 401 is consisted of a second counter (Second_count) 411 of 7 bits, a cycle counter (Cycle_count) 412 of 13 bits and a cycle offset (Cycle_offset) 413 of 12 bits. The second counter 411 counts in measures of second. The cycle counter 412 counts in measures of cycle (125 µ second). The cycle offset 413 is a counter to count the standard clock (24.576 MHz, cycle of 40.7 n seconds) of the system by dividing by 3072 as a divisor. The value of the cycle offset 413 ranges from 0 to 3071. Therefore, normally it hardly happens that all of 12 bits of the cycle offset 413 are 1 (0xFFF in a hexadecimal scale; 0x represents a hexadecimal scale). The command register 402 is an area to be set the command transmitted from the controller.

Each target device has such a register space. When the controller receives the transmitted cycle start packet, a cycle time included in the cycle start packet is written in the cycle time register 401 of each device. By that, synchronization can be established among all the devices connected to the network.

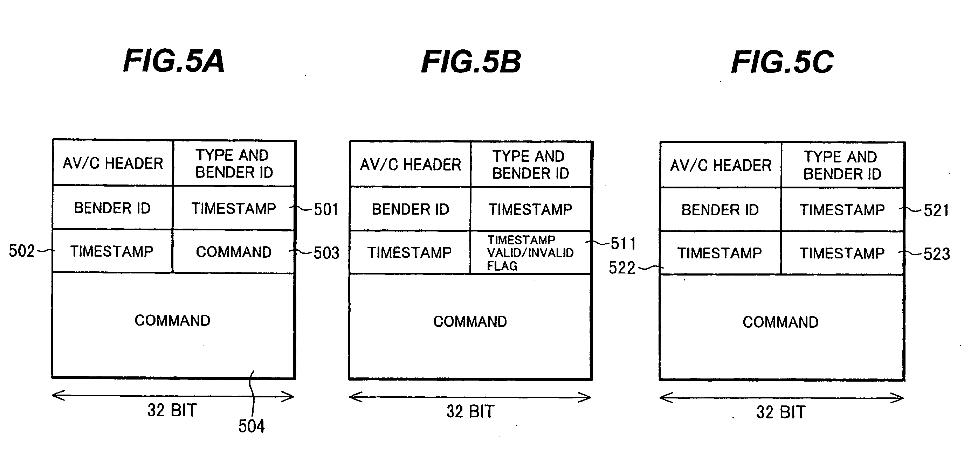

FIG. 5A shows an example of a command packet that is transmitted from the controller to the target in the embodiment of the present invention. The command packet includes a fixed header information (AV/C header, type, bender ID). Following to the header information, time-stamp areas 501 and 502 are provided, and command areas 503 and 504 are provided. Formats of the time-stamps 501 and 502 are the same as those of the cycle time explained with reference to FIG. 4B. These time-stamps 501 and 502 are the command executing timing T_res explained with reference to FIG. 3B.

Especially, in this embodiment, the cycle offset 413 is used as a flag because the cycle offset normally does not become 0xFFF in order to have a selection (the designation) of executing the process as shown in FIG. 3A or as shown in FIG. 3B. That is, when the cycle offset of the time-stamp 501 and 502 in the command transmitted from the controller is 0xFFF, the command is immediately executed as FIG. 3B. When the cycle offset of the time-stamp 501 and 502 in the command transmitted from the controller is not 0xFFF, the command is executed as FIG. 3B after the time represented by the time-stamps 501 and 502.

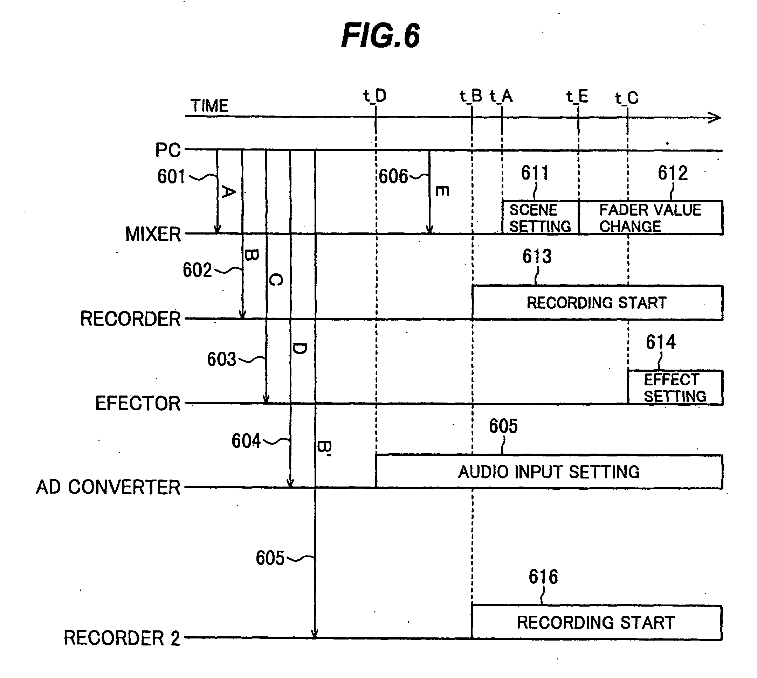

FIG. 6 is a timing diagram showing a progress of the operation in each device of the system in FIGs. 1A and 1B. As indicated by the reference numbers 601 to 606, the PC 101 transmits the commands A, B, C, D and B' to the mixer 102, the recorder 105, the effecter 103, the AD converter 104 and a recorder 2 (not shown in FIGs. 1A and 1B). The times t_A, t_B, t_C, t_D and t_E represent time-stamps stored in the commands A, B, C, D and E. The time-stamp registered in the command B' is "t_B" as same as in the command B. The sequential order from the beginning to the end is following: t_D, t_B, t_A, t_E, and t_C.

First, the command D is executed in the AD converter 104 at the timing of t_D. This is for executing the process of audio input port setting as indicated by reference number 615. Next, the command B in the recorder 105 and the command B' in the recorder 2 are executed at the timing t_B. This is for executing a recording start process as indicated by the reference numbers 613 and 616. Since the time-stamps of the command B and B' are the same t_B, the recording start timings in both recorders are synchronized. Next, the command A is executed in the mixer 102 at the timing of t_A, and a scene setting process is execited as indicated by the reference number 611. Thereafter, the command E is executed in the mixer 102 at the timing t_E, and a changing process of a fader value as indicated by the reference number 612 is executed. Moreover, the command C is executed in the effecter 103 at the timing of t_C, and an effect setting process as indicated by the reference number 614 is executed.

As described in the above, each device can be controlled at the timing represented by each time-stamp determined in advance, and the synchronized operation as a whole can be realized.

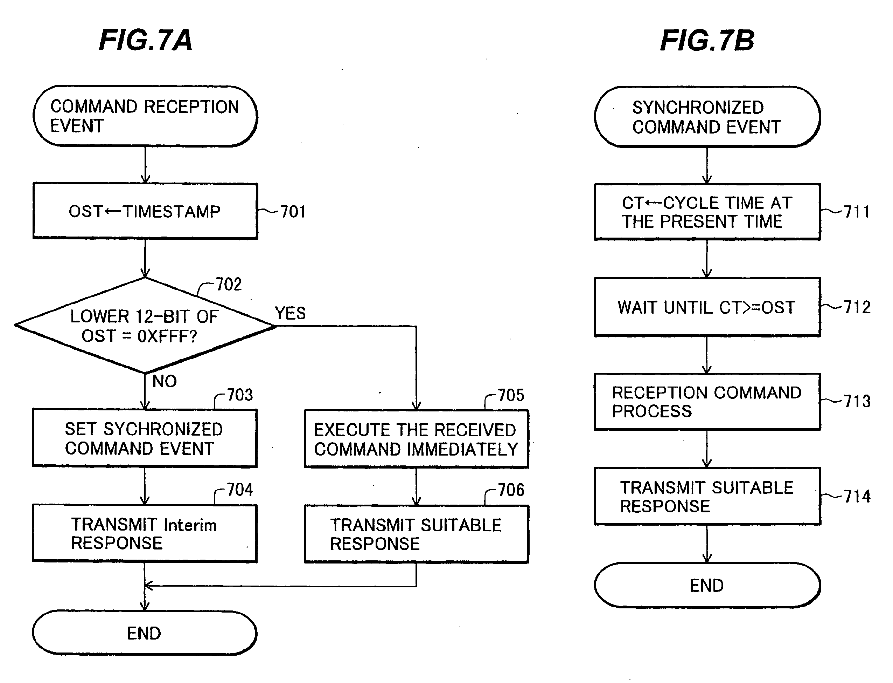

FIGs. 7A and 7B are flows of the command reception event process in the target device of the embodiment of the present invention. The time-stamp of the received command is set to a work register OST at Step 701. It is judged whether the lower 12-bit of OST is 0xFFF or not at Step 702. When the lower 12-bit of OST is 0xFFF, the received command is executed immediately at Step 705. Then, a response is transmitted at Step 706, and the process is finished. When the lower 12-bit of OST is not 0xFFF, a synchronizing command event corresponding to the received command is set at Step 703. Then, the Interim response is transmitted at Step 704, and the process is finished.

FIG. 7B shows a flow of the synthesizing command event at Step 703. At Step 711, a value of the cycle register representing the present time is set to a register CT, and it is judged that the CT becomes equal to or greater than OST or not at Step 712. Step 711 and Step 712 are repeated to make the process wait until the register CT becomes equal to or greater than the register OST (CT>=OST) as a result. When the CT becomes equal to or greater than OST, the received command is processed at Step 713, the response is transmitted at Step 714, and the process is finished.

Moreover, instead of making the process wait at Step 712, the command may be processed in advance, and the result of the process may be validated when the register CT becomes equal to or greater than the register OST (CT>=OST). That is, the command may be terminated before the register becomes equal to or greater than the register OST (CT>=OST), the process may be validated by adding only trigger at a timing of CT>=OST. In this case, the time-stamp value OST in the command means a time when the execution of the command is finished instead of the time when the command is executed.

However, the processing method of the command (FIG. 3A or FIG. 3B) is decided whether the flag that is in the cycle offset area in the time-stamps 501 and 502 in FIG. 5A is 0xFFF or not , the area used as the flag is not limited to be in the cycle offset area. For example, other area 511 in the command may be used as an area for the flag as shown in FIG. 5B.

Also, although the time-stamps 501 and 502 are defined as the same format as the cycle time register, the format of the time-stamp in the command is not limited only to the above. As a time-stamp in the command, a part (for example, only the cycle counter and the cycle offset) of the cycle time register may be used. Moreover, the second counter cannot represent more than 127 seconds as far as the format is the same as the cycle time register because an area for the second counter is 7-bit. Then, as shown in FIG. 5C, areas of the time-stamps 521 and 522 are defined to be in the format in FIG. 4B as same as that shown in FIG. 5A, and an area of the time-stamp 523 is defined as an area to designate a time in measures of 128 seconds. By that, time after 128 seconds or more may be designated. In this case, it is necessary to have a register representing a time in measures of 128 seconds other than the cycle time register in FIG. 4 in the target side.

Although, in the above-described embodiment, the example for controlling each device from the PC as a controller has been explained, the present invention can be applied to any case to establish a synchronization of operation of each device. For example, when the sound instruction commands are transmitted to a plurality of the target devices to make them sound, the sequencer reads the automatic performance data in advance, and each sound instruction command are transmitted to each target device in advance with the time-stamp representing a time to sound. By that, sounding timings at the plurality of target devices can be synchronized.

Also an arbitral device in the network can be the controller or the target according to the embodiment of the present invention. Moreover, one device may have functions of both of the controller and the target devices.

Although the example using the network based on the IEEE 1394 Standard has been explained in the above embodiment, the present invention can be applied to any communication system as far as having a structure for transferring a command in the asynchronous transfer mode, a structure for transferring wave data such as audio data, etc. in the isochronous transfer mode and a structure for establishing synchronization among devices having a common cycle time (clock).

The present invention has been described in connection with the preferred embodiments. The invention is not limited only to the above embodiments. It is apparent that various modifications, improvements, combinations, and the like can be made by those skilled in the art.

## Claims

1. A command synchronization establishment system using a network wherein data is transferred by an isochronous transfer, a command (311, A, B, C, D, E, B') is transferred by an asynchronous transfer, and a synchronized clock is shared by apparatuses (101, 102, 103, 104, 105, 106) connected to the network, the system comprising:
a controller(101) connected to the network, and
a target apparatus (102, 103, 104, 105, 106) connected to the network
said controller (101) comprising means for transmitting a command (311, A, B, C, D, E, B') including a time-stamp (T_res, 501, 502, t_A, t_B, t_C, t_D, t_E) to a target apparatus (102, 103, 104, 105, 106) by using the asynchronous transfer; and
said target apparatus (102, 103, 104, 105, 106) comprising means for receiving the command (311, A, B, C, D, E, B'), means for temporally storing the received command (311, A, B, C, D, E, B') in order not to execute the received command (311, A, B, C, D, E, B') instantly, and means for executing the received command (311, A, B, C, D, E, B') in accordance with the time-stamp (T_res, 501, 502, t_A, t_B, t_C, t_D, t_E) included in the command (311, A, B, C, D, E, B') to be executed,
**characterized in that** the target apparatus (102, 103, 104, 105, 106) further comprises means for transmitting a first response to the controller (101), when the command (311, A, B, C, D, E, B') is received by the target apparatus (102, 103, 104, 105, 106), and for transmitting a second response to the controller (101) indicating that said command (311, A, B, C, D, E, B') received by said target appartus (102, 103, 104, 105, 106) is executed in accordance with the time stamp (T_res, 501, 502, t_A. t_B, t_C, t_D, t_E).

2. A command synchronization establishment system according to claim 1, wherein said means for executing execute the received command (311, A, B, C, D, E, B') when a current time reaches a time represented by the time-stamp (T_res, 501, 502, t_A, t_B, t_C, t_D, t_E) included in the command (311, A, B, C, D, E, B') to be executed.

3. A command synchronization establishment system according to claim 1, wherein said means for executing execute the received command (311, A, B, C, D, E, B') before a time represented by the time-stamp (T_res, 501, 502, t_A, t_B, t_C, t_D, t_E) included in the command (311, A, B, C, D, E, B') to be executed and validates a process result when a current time reaches a time represented by the time-stamp (T_res, 501, 502, t_A, t_B, t_C, t_D, t_E).

4. A command synchronization establishment system according to claim 1, wherein said time-stamp (T_res, 501, 502, t_A. t_B, t_C, t_D, t_E) included in the command (311, A, B, C, D, E, B') is in a format including a part or all of a format of a cycle time register (401) of the synchronized clock for sharing a current time by the apparatuses (101, 102, 103, 104, 105, 106) connected to the network.

5. A command synchronization establishment system according to claim 1, wherein said command (311, A, B, C, D, E, B') includes a flag instructing the means for executing to execute the command (311, A, B, C, D, E, B') instantly or when a current time reaches a time represented by the time-stamp (T_res, 501, 502, t_A, t_B, t_C, t_D, t_E) included in the command (311, A, B, C, D, E, B').

6. A command synchronization establishment system according to claim 5, wherein the flag uses a part of a format of the time-stamp (T_res, 501, 502, t_A. t_B, t_C, t_D, t_E) included in the command (311, A, B, C, D, E, B').

7. A command synchronization establishment method using a network wherein data is transferred by an isochronous transfer, a command (311, A, B, C, D, E, B') is transferred by an asynchronous transfer, and a synchronized clock is shared by apparatuses (101, 102, 103, 104, 105, 106) connected to the network, the method comprising the steps of:
transmitting a command (311, A, B, C, D, E, B') including a time-stamp (T_res, 501, 502, t_A, t_B, t_C, t_D, t_E) to a target apparatus (102, 103, 104, 105, 106) by using the asynchronous transfer from a controller (101) connected to the network;
receiving the command (311, A, B, C, D, E, B') by the target apparatus (102, 103, 104, 105, 106) connected to the network;
temporally storing the received command (311, A, B, C, D, E, B') in order not to execute the received command (311, A, B, C, D, E, B') instantly; and
executing the received command (311, A, B, C, D, E, B') in accordance with the time-stamp (T_res, 501, 502, t_A, t_B, t_C, t_D, t_E) included in the command (311, A, B, C, D, E, B') to be executed,
**characterized in that** the target apparatus (102, 103, 104, 105, 106) transmits a first response to the controller (101) when the command (311, A, B, C, D, E, B') is received by the target apparatus, and a second response, when said command (311, A, B, C, D, E, B') received by said target apparatus is executed in accordance with the time stamp (T_res, 501, 502, t_A, t_B, t_C, t_D, t_E).

8. A controller (101) for a command synchronization establishment system as defined in claim 1 , the controller (101) comprising:
a transmitter that transmits a command (311, A, B, C, D, E, B') including a time-stamp (T_res, 501, 502, t_A, t_B, t_C, t_D, t_E) to a target apparatus (102, 103, 104, 105, 106) by using the asynchronous transfer,
**characterized in that** the controller (101) further comprises means for receiving a first response from the target apparatus (102, 103, 104, 105, 106), when the command (311, A, B, C, D, E, B') is received by the target apparatus (102, 103, 104, 105, 106), and for receiving a second response indicating that said command (311, A, B, C, D, E, B') received by said target apparatus (102, 103, 104, 105, 106) is executed by said target apparatus (102, 103, 104, 105, 106) in accordance with the time stamp (T_res, 501, 502, t_A, t_B, t_C, t_D, t_E).

9. A target apparatus (102, 103, 104, 105, 106) for a command synchronization establishment system as defined in claim 1, the target apparatus (102, 103, 104, 105, 106) comprising:
means for receiving the command (311, A, B, C, D, E, B'); means for temporally storing the received command (311, A, B, C, D, E, B') in order not to execute the received command (311, A, B, C, D, E, B') instantly; and
means for executing the received command (311, A, B, C, D, E, B') in accordance with the time-stamp (T_res, 501, 502, t_A, t_B, t_C, t_D, t_E) included in the command (311, A, B, C, D, E, B') to be executed
**characterized in that** the target apparatus (102, 103, 104, 105, 106) further comprises means for transmitting a first response, when the command (311, A, B, C, D, E, B') is received, and for transmitting a second response indicating that said command (311, A, B, C, D, E, B') is executed in accordance with the time stamp (T_res, 501, 502, t_A, t_B, t_C, t_D, t_E).

## Patentansprüche

1. System zur Synchronisierung von Befehlen, welches ein Netzwerk nutzt, wobei Daten durch isochrone Übertragung übertragen werden, ein Befehl (311, A, B, C, D, E, B') durch asynchrone Übertragung übertragen wird, und eine synchronisierte Uhr von mit dem Netzwerk verbundenen Geräten (101, 102, 103, 104, 105, 106) geteilt wird, wobei das System folgendes aufweist:
einen mit dem Netzwerk verbundenen Kontroller (101) und
ein mit dem Netzwerk verbundenes Zielgerät (102, 103, 104, 105, 106),
wobei der Kontroller (101) Mittel zum Senden eines Befehls (311, A, B, C, D, E, B') einschließlich eines Zeitstempels (T_res, 501, 502, t_A, t_B, t_C, t_D, t_E) an das Zielgerät (102, 103, 104, 105, 106) unter Verwendung der asynchronen Übertragung aufweist, und
das Zielgerät (102, 103, 104, 105, 106) Mittel zum Empfangen des Befehls (311, A, B, C, D, E, B'), Mittel zum temporären Speichern des empfangenen Befehls (311, A, B, C, D, E, B'), um den empfangenen Befehl (311, A, B, C, D, E, B') nicht sofort auszuführen, und Mittel zum Ausführen des empfangenen Befehls (311, A, B, C, D, E, B') gemäß dem im auszuführenden Befehl (311, A, B, C, D, E, B') enthaltenen Zeitstempel (T_res, 501, 502, t_A, t_B, t_C, t_D, t_E) aufweist,
**dadurch gekennzeichnet, daß** das Zielgerät (102, 103, 104, 105, 106) ferner Mittel zum Senden einer ersten Antwort an den Kontroller (101) aufweist, wenn der Befehl (311, A, B, C, D, E, B') von dem Zielgerät (102, 103, 104, 105, 106) empfangen wird, und zum Senden einer zweiten Antwort an den Kontroller (101), welche anzeigt, daß der von dem Zielgerät (102, 103, 104, 105, 106) empfangene Befehl (311, A, B, C, D, E, B') gemäß dem Zeitstempel (T_res, 501, 502, t_A, t_B, t_C, t_D, t_E) ausgeführt wird.

2. System zur Synchronisierung von Befehlen gemäß Anspruch 1, wobei die Mittel zum Ausführen den empfangenen Befehl (311, A, B, C, D, E, B') ausführen, wenn eine gegenwärtige Zeit eine durch den im auszuführenden Befehl (311, A, B, C, D, E, B') enthaltenen Zeitstempel (T_res, 501, 502, t_A, t_B, t_C, t_D, t_E) repräsentierte Zeit erreicht.

3. System zur Synchronisierung von Befehlen gemäß Anspruch 1, wobei die Mittel zum Ausführen den empfangenen Befehl (311, A, B, C, D, E, B') vor einer durch den im auszuführenden Befehl (311, A, B, C, D, E, B') enthaltenen Zeitstempel (T_res, 501, 502, t_A, t_B, t_C, t_D, t_E) repräsentierten Zeit ausführen und ein Prozeßergebnis auswerten, wenn eine gegenwärtige Zeit eine durch den Zeitstempel (T_res, 501, 502, t_A, t_B, t_C, t_D, t_E) repräsentierte Zeit erreicht.

4. System zur Synchronisierung von Befehlen gemäß Anspruch 1, wobei der in dem Befehl (311, A, B, C, D, E, B') enthaltene Zeitstempel (T_res, 501, 502, t_A, t_B, t_C, t_D, t_E) in einem Format ist, welches einen Teil oder alles eines Formats eines Zeitregisters (401) der synchronisierten Uhr zum Teilhaben der mit dem Netzwerk verbundenen Geräte (101, 102, 103, 104, 105, 106) an einer gegenwärtigen Zeit umfaßt.

5. System zur Synchronisierung von Befehlen gemäß Anspruch 1, wobei der Befehl (311, A, B, C, D, E, B') ein Flag umfaßt, welches die Mittel zum Ausführen anweist, den Befehl (311, A, B, C, D, E, B') sofort auszuführen oder wenn eine gegenwärtige Zeit eine durch den in dem Befehl (311, A, B, C, D, E, B') enthaltenen Zeitstempel (T_res, 501, 502, t_A, t_B, t_C, t_D, t_E) repräsentierte Zeit erreicht.

6. System zur Synchronisierung von Befehlen gemäß Anspruch 5, wobei das Flag einen Teil eines Formats des in dem Befehl (311, A, B, C, D, E, B') enthaltenen Zeitstempels (T_res, 501, 502, t_A, t_B, t_C, t_D, t_E) verwendet.

7. Verfahren zur Synchronisierung von Befehlen, welches ein Netzwerk nutzt, wobei Daten durch isochrone Übertragung übertragen werden, ein Befehl (311, A, B, C, D, E, B') durch asynchrone Übertragung übertragen wird, und eine synchronisierte Uhr von mit dem Netzwerk verbundenen Geräten (101, 102, 103, 104, 105, 106) geteilt wird, wobei das Verfahren folgende Schritte aufweist:
Senden eines Befehls (311, A, B, C, D, E, B') einschließlich eines Zeitstempels (T_res, 501, 502, t_A, t_B, t_C, t_D, t_E) an ein Zielgerät (102, 103, 104, 105, 106) unter Verwendung der asynchronen Übertragung von einem mit dem Netzwerk verbundenen Kontroller (101),
Empfangen des Befehls (311, A, B, C, D, E, B') durch den mit dem Netzwerk verbundenen Zielgerät (102, 103, 104, 105, 106);
temporäres Speichern des empfangenen Befehls (311, A, B, C, D, E, B'), um den empfangenen Befehl (311, A, B, C, D, E, B') nicht sofort auszuführen; und
Ausführen des empfangenen Befehls (311, A, B, C, D, E, B') gemäß dem im auszuführenden Befehl (311, A, B, C, D, E, B') enthaltenen Zeitstempel (T_res, 501, 502, t_A, t_B, t_C, t_D, t_E),
**dadurch gekennzeichnet, daß** das Zielgerät (102, 103, 104, 105, 106) eine erste Antwort an den Kontroller (101) sendet, wenn der Befehl (311, A, B, C, D, E, B') von dem Zielgerät (102, 103, 104, 105, 106) empfangen wird, und eine zweite Antwort, wenn der von dem Zielgerät empfangene Befehl (311, A, B, C, D, E, B') gemäß dem Zeitstempel (T_res, 501, 502, t_A, t_B, t_C, t_D, t_E) ausgeführt wird.

8. Ein Kontroller (101) für ein System zur Synchronisierung von Befehlen gemäß Anspruch 1, wobei der Kontroller (101) folgendes aufweist:
einen Sender, der unter Verwendung der asynchronen Übertragung einen Befehl (311, A, B, C, D, E, B') einschließlich eines Zeitstempels (T_res, 501, 502, t_A, t_B, t_C, t_D, t_E) an ein Zielgerät (102, 103, 104, 105, 106) sendet,
**dadurch gekennzeichnet, daß** der Kontroller ferner Mittel zum Empfangen einer ersten Antwort von dem Zielgerät (102, 103, 104, 105, 106) aufweist, wenn der Befehl (311, A, B, C, D, E, B') von dem zielgerät (102, 103, 104, 105, 106) empfangen wird, und zum Empfangen einer zweiten Antwort, welche anzeigt, daß der von dem Zielgerät (102, 103, 104, 105, 106) empfangene Befehl (311, A, B, C, D, E, B') gemäß dem Zeitstempel (T_res, 501, 502, t_A, t_B, t_C, t_D, t_E) von dem Zielgerät (102, 103, 104, 105, 106) ausgeführt wird.

9. Zielgerät (102, 103, 104, 105, 106) für ein System zur Synchronisierung von Befehlen gemäß Anspruch 1, wobei das Zielgerät (102, 103, 104, 105, 106) folgendes aufweist:
Mittel zum Empfangen des Befehls (311, A, B, C, D, E, B'); Mittel zum temporären Speichern des empfangenen Befehls (311, A, B, C, D, E, B'), um den empfangenen Befehl (311, A, B, C, D, E, B') nicht sofort auszuführen, und Mittel zum Ausführen des empfangenen Befehls (311, A, B, C, D, E, B') gemäß dem im auszuführenden Befehl (311, A, B, C, D, E, B') enthaltenen Zeitstempel (T_res, 501, 502, t_A, t_B, t_C, t_D, t_E),
**dadurch gekennzeichnet, daß** das Zielgerät (102, 103, 104, 105, 106) ferner Mittel zum Senden einer ersten Antwort aufweist, wenn der Befehl (311, A, B, C, D, E, B') empfangen wird, und zum Senden einer zweiten Antwort, welche anzeigt, daß der Befehl (311, A, B, C, D, E, B') gemäß dem Zeitstempel (T_res, 501, 502, t_A, t_B, t_C, t_D, t_E) ausgeführt wird.

## Revendications

1. - Système d'établissement de synchronisation de commande à l'aide d'un réseau, dans lequel des données sont transférées par un transfert isochrone, une commande (311, A, B, C, D, E, B') est transférée par un transfert asynchrone, et une horloge synchronisée est partagée par des appareils (101, 102, 103, 104, 105, 106) connectés au réseau, le système comprenant :
- un contrôleur (101) connecté au réseau ; et
- un appareil cible (102, 103, 104, 105, 106) connecté au réseau ;
ledit contrôleur (101) comprenant un moyen pour transmettre une commande (311, A, B, C, D, E, B') comprenant un marqueur temporel (T_res, 501, 502, t_A, t_B, t_C, t_D, t_E) à un appareil cible (102, 103, 104, 105, 106) en utilisant le transfert asynchrone ; et
ledit appareil cible (102, 103, 104, 105, 106) comprenant un moyen pour recevoir la commande (311, A, B, C, D, E, B'), un moyen pour stocker temporairement la commande reçue (311, A, B, C, D, E, B') afin de ne pas exécuter la commande reçue (311, A, B, C, D, E, B') immédiatement, et un moyen pour exécuter la commande reçue (311, A, B, C, D, E, B') conformément au marqueur temporel (T_res, 501, 502, t_A, t_B, t_C, t_D, t_E) inclus dans la commande (311, A, B, C, D, E, B') devant être exécutée;
**caractérisé par le fait que** l'appareil cible (102, 103, 104, 105, 106) comprend en outre un moyen pour transmettre une première réponse au contrôleur (101), lorsque la commande (311, A, B, C, D, E, B') est reçue par l'appareil cible (102, 103, 104, 105, 106), et pour transmettre une seconde réponse au contrôleur (101) indiquant que ladite commande (311, A, B, C, D, E, B') reçue par ledit appareil cible (102, 103, 104, 105, 106) est exécutée conformément au marqueur temporel (T_res, 501, 502, t_A, t_B, t_C, t_D, t_E).

2. - Système d'établissement d'une synchronisation de commande selon la revendication 1, dans lequel ledit moyen d'exécution exécute la commande reçue (311, A, B, C, D, E, B') lorsqu'un temps réel atteint un temps représenté par le marqueur temporel (T_res, 501, 502, t_A, t_B, t_C, t_D, t_E) inclus dans la commande (311, A, B, C, D, E, B') devant être exécutée.

3. - Système d'établissement d'une synchronisation de commande selon la revendication 1, dans lequel ledit moyen d'exécution exécute la commande reçue (311, A, B, C, D, E, B') avant un temps représenté par le marqueur temporel (T_res, 501, 502, t_A, t_B, t_C, t_D, t_E) inclus dans la commande (311, A, B, C, D, E, B') devant être exécutée et valide un résultat de procédé lorsqu'un temps réel atteint un temps représenté par le marqueur temporel (T_res, 501, 502, t_A, t_B, t_C, t_D, t_E).

4. - Système d'établissement d'une synchronisation de commande selon la revendication 1, dans lequel ledit marqueur temporel (T_res, 501, 502, t_A, t_B, t_C, t_D, t_E) inclus dans la commande (311, A, B, C, D, E, B') est dans un format comprenant une partie ou la totalité d'un format d'un registre de temps de cycle (401) de l'horloge synchronisée pour partager un temps réel par les appareils (101, 102, 103, 104, 105, 106) connectés au réseau.

5. - Système d'établissement d'une synchronisation de commande selon la revendication 1, dans lequel ladite commande (311, A, B, C, D, E, B') comprend une balise instruisant le moyen d'exécution pour exécuter la commande (311, A, B, C, D, E, B') immédiatement ou lorsqu'un temps réel atteint un temps représenté par le marqueur temporel (T_res, 501, 502, t_A, t_B, t_C, t_D, t_E) inclus dans la commande (311, A, B, C, D, E, B').

6. - Système d'établissement d'une synchronisation de commande selon la revendication 5, dans lequel la balise utilise une partie d'un format du marqueur temporel (T_res, 501, 502, t_A, t_B, t_C, t_D, t_E) inclus dans la commande (311, A, B, C, D, E, B').

7. - Procédé d'établissement d'une synchronisation de commande utilisant un réseau, dans lequel des données sont transférées par un transfert isochrone, une commande (311, A, B, C, D, E, B') est transférée par un transfert asynchrone, et une horloge synchronisée est partagée par des appareils (101, 102, 103, 104, 105, 106) connectés au réseau, le procédé comprenant les étapes consistant à :
- transmettre une commande (311, A, B, C, D, E, B') comprenant un marqueur temporel (T_res, 501, 502, t_A, t_B, t_C, t_D, t_E) à un appareil cible (102, 103, 104, 105, 106) en utilisant le transfert asynchrone à partir d'un contrôleur (101) connecté au réseau ;
- recevoir la commande (311, A, B, C, D, E, B') par l'appareil cible (102, 103, 104, 105, 106) connecté au réseau ;
- stocker temporairement la commande reçue (311, A, B, C, D, E, B') afin de ne pas exécuter la commande reçue (311, A, B, C, D, E, B') immédiatement ; et
- exécuter la commande reçue (311, A, B, C, D, E, B') conformément au marqueur temporel (T_res, 501, 502, t_A, t_B, t_C, t_D, t_E) inclus dans la commande (311, A, B, C, D, E, B') devant être exécutée ;
**caractérisé par le fait que** l'appareil cible (102, 103, 104, 105, 106) transmet une première réponse au contrôleur (101) lorsque la commande (311, A, B, C, D, E, B') est reçue par l'appareil cible, et une seconde réponse, lorsque ladite commande (311, A, B, C, D, E, B') reçue par ledit appareil cible est exécutée conformément au marqueur temporel (T_res, 501, 502, t_A, t_B, t_C, t_D, t_E).

8. - Contrôleur (101) pour un système d'établissement d'une synchronisation de commandes tel que défini à la revendication 1, le contrôleur (101) comprenant :
un émetteur qui transmet une commande (311, A, B, C, D, E, B') comprenant un marqueur temporel (T_res, 501, 502, t_A, t_B, t_C, t_D, t_E) à un appareil cible (102, 103, 104, 105, 106) en utilisant le transfert asynchrone ;
**caractérisé par le fait que** le contrôleur (101) comprend en outre un moyen pour recevoir une première réponse provenant de l'appareil cible (102, 103, 104, 105, 106), lorsque la commande (311, A, B, C, D, E, B') est reçue par l' appareil cible (102, 103, 104, 105, 106), et pour recevoir une seconde réponse indiquant que ladite commande (311, A, B, C, D, E, B') reçue par ledit appareil cible (102, 103, 104, 105, 106) est exécutée par ledit appareil cible (102, 103, 104, 105, 106) conformément au marqueur temporel (T_res, 501, 502, t_A, t_B, t_C, t_D, t_E).

9. - Appareil cible (102, 103, 104, 105, 106) pour un système d'établissement d'une synchronisation de commande tel que défini à la revendication 1, l'appareil cible (102, 103, 104, 105, 106) comprenant :
- un moyen pour recevoir la commande (311, A, B, C, D, E, B') ;
- un moyen pour stocker temporairement la commande reçue (311, A, B, C, D, E, B') afin de ne pas exécuter la commande reçue (311, A, B, C, D, E, B') immédiatement ; et
- un moyen pour exécuter la commande reçue (311, A, B, C, D, E, B') conformément au marqueur temporel (T_res, 501, 502, t_A, t_B, t_C, t_D, t_E) inclus dans la commande (311, A, B, C, D, E, B') devant être exécutée;
**caractérisé par le fait que** l'appareil cible (102, 103, 104, 105, 106) comprend en outre un moyen pour transmettre une première réponse, lorsque la commande (311, A, B, C, D, E, B') est reçue, et pour transmettre une seconde réponse indiquant que ladite commande (311, A, B, C, D, E, B') est exécutée conformément au marqueur temporel (T_res, 501, 502, t_A, t_B, t_C, t_D, t_E).
